# EUROPÄISCHE PATENTSCHRIFT

(11) **EP 1 362 628 B1**
(45) Veröffentlichungstag und Bekanntmachung des Hinweises auf die Patenterteilung: **29.08.2007**
(21) Anmeldenummer: 03009783.6
(22) Anmeldetag: 08.05.2003
(51) Int. Cl.: B01D 46/06, B01D 46/24, B01D 29/15, B01D 29/58

(54) **Filterelement zur Reinigung eines Fluidstroms**
Filter element for purifying a fluid stream
Elément filtrant pour purifier un courant de fluide

(30) Priorität: 10.05.2002 DE 10220724
(43) Veröffentlichungstag der Anmeldung: 19.11.2003
(73) Patentinhaber: Mann + Hummel GmbH, 71638 Ludwigsburg (DE)
(72) Erfinder: Winter, Manfred, 74229 Oedheim (DE); Staudenmayer, Bernhard, 67373 Dudenhofen (DE); Gohle, Angelika, 67365 Schwegenheim (DE); Weiss, Holger, 67346 Speyer (DE)
(74) Vertreter: Voth, Gerhard

(56) Entgegenhaltungen:
- WO-A-02/49738
- WO-A-98/45009
- DE-A- 19 519 438
- DE-A- 19 540 876
- GB-A- 2 307 426
- US-A- 5 290 445
- DATABASE WPI Section PQ, Week 200123 Derwent Publications Ltd., London, GB; Class Q74, AN 2001-221794 XP002252205 & JP 2001 029720 A (JAPAN VILENE CO LTD), 6. Februar 2001 (2001-02-06)
- DATABASE WPI Section Ch, Week 199942 Derwent Publications Ltd., London, GB; Class D22, AN 1999-501678 XP002252206 & JP 11 216320 A (KITZ CORP), 10. August 1999 (1999-08-10)

## Beschreibung

### Stand der Technik

Die Erfindung betrifft ein Filterelement zur Reinigung eines Fluidstroms bestehend aus einem zylindrischen Stützkörper welcher mit Durchbrüchen versehen ist und welcher an einem axialen Ende verschlossen ist, wobei auf dem Stützkörper ein Filtermedium angeordnet ist.

Aus der DE 37 23 807 ist ein rohrförmiges Filterelement bekannt, welches von einem starren, radial gelochten Stützrohr, einem Filtermedium und Endscheiben gebildet wird. Das Stützrohr ist außen mit dem Filtermedium überzogen. Die Endscheiben bestehen aus Kunststoff, welche nachträglich an das Stützrohr angespritzt sind. Die Endscheiben schließen das Filtermedium dichtend ab, wodurch das Filtermedium gleichzeitig auf dem Stützrohr fixiert wird. Wie allgemein bekannt ist, werden Stützrohre mit einem vorkonfektionierten schlauchförmigen Filtermedium überzogen. Hierbei kann das Filtermedium zum Beispiel mit einer Längsnaht zusammengenäht sein, wodurch sich das schlauchförmige Filtermedium ergibt. Dieses vorgefertigten schlauchförmige Filtermedium wird in einem Montagevorgang über das Stützrohr gezogen. Es sind jedoch für jeden Stützrohrdurchmesser separate schlauchförmige Filtermedien anzufertigen, was neben einem erheblichen logistischen Aufwand noch Montage- und Lagerkosten verursacht. Weiterhin lassen sich manche Filtermedien, insbesondere beschichtete Filtermedien in vorgefertigtem Zustand nicht über das Stützrohr ziehen, da sie nicht auf dem Stützrohr gleiten.

Aus der WO02/49738 ist ein Filterelement bekannt, dass mit einer Aushebelasche versehen ist. Diese muss um 90° gedreht werden, um axiale Zugkräfte auf das Filterelement zu übertragen. Die Aushebelasche ist über ein Filmscharnier mit einem Stützkörper verbunden. Sofern sehr hohe Kräfte auf die Aushebelasche wirken, besteht die Gefahr, dass das Filmscharnier reist und das Filterelement nicht mehr aus seiner Position entfernt werden kann.

Der Erfindung liegt die Aufgabe zugrunde ein Filterelement mit einem Stützkörper und einem Filtermedium zu schaffen welches prozesssicher und kostengünstig herstellbar ist. Diese Aufgabe wird durch die Merkmale des Patentanspruchs 1 gelöst.

Das erfindungsgemäße Filterelement dient der Reinigung eines Fluids, wie zum Beispiel Luft und weist einen Stützkörper mit einer Mantelfläche und zwei Stirnseiten auf, sowie ein schweißbares Filtermedium. Hierbei kann das Filtermedium zum Beispiel durch ein Polyestervlies gebildet werden. Der Stützkörper ist zylindrisch ausgebildet wobei er einen beliebigen Querschnitt aufweisen kann. Weiterhin ist der Stützkörper für das zu reinigende Fluid durchlässig. Die Durchlässigkeit des Stützkörpers kann zum Beispiel durch mehrere Fenster in dem Stützkörper oder durch ein fluiddurchlässiges Material bei einem nicht durchbrochenden Zylinder erzeugt werden. Die Fenster können beliebig zum Beispiel kreisförmig oder rechteckig ausgeführt sein

Die Erfindung sieht vor, dass an der geschlossenen Stirnseite des Stützkörpers eine Grifflasche vorgesehen ist. Dies vereinfacht den Austausch des Filterelements und verhindert außerdem eine Beschädigung des Filtermediums bei der Handhabung. Für eine lagerichtige Positionierung des Filterelements ist gemäß der Erfindung vorgesehen, wenigstens drei Fixiernocken an der geschlossenen Stirnseite, dass heißt an der, der Dichtung gegenüberliegenden Seite anzuordnen. Diese Fixiernocken schaffen in Verbindung mit einem Stützring eine lagerichtige Positionierung des Filterelements.

Das Filtermedium umschließt den Stützkörper an seiner Mantelfläche und ist über seine gesamte Länge durch mindestens eine Schweißnaht verschweißt. Beim Verschweißen des Filtermediums wird das Filtermedium im Bereich der Schweißnaht verdichtet, wobei die Schweißnaht nicht höher aufträgt als das übrige Material. Dadurch können diverse Montagevarianten realisiert werden, welche bei einer höher auftragenden Naht, wie sie zum Beispiel beim Vernähen entsteht, nicht umgesetzt werden können.

Es besteht auch die Möglichkeit über die Schweißnaht den Stützkörper mit dem Filtermedium zu verbinden. Dabei besteht der Stützkörper aus einem schweißbaren Material, welches beim Verschweißen des Filtermediums oberflächlich angeschmolzen wird, wodurch das Filtermedium zumindest stellenweise mit dem Stützkörper eine Verbindung eingeht.

Das Filtermedium überlappt sich in vorteilhafter Weise entlang der Schweißnaht wodurch das Filtermedium zuverlässig verschweißt werden kann. Das Filtermedium kann in einem kontinuierlichen Prozess direkt von einem Coil abgewickelt, um den Stützkörper gewickelt, verschweißt und abgeschnitten werden, wobei die Reihenfolge der Arbeitsgänge auch variierbar ist. Durch die Verarbeitung des Filtermediums direkt von dem Coil entfallen Arbeitsgänge, welche durch das Vorkonfektionieren eines Filterschlauchs, der über den Stützkörper gezogen wird verursacht werden. Weiterhin können auch beschichtete Filtermedien, welche nicht auf dem Stützrohr gleiten, um das Stützrohr gewickelt werden.

In einer Ausgestaltung der Erfindung weist der Stützkörper im Bereich einer Stirnseite eine Dichtung auf, diese Dichtung besteht in vorteilhafter Weise aus einem PUR-Schaum, welcher sich sowohl mit dem Filtermedium als auch mit dem Stützkörper verbindet.

Weiterbildungsgemäß wird eine Einrichtung zur Herstellung eines Filterelements vorgeschlagen. Diese besteht aus einem Dorn zur Aufnahme des Stützkörpers und einer Schweißeinrichtung, wobei die Schweißeinrichtung eine Ultraschallschweißanlage ist. Üblicherweise sind solche Schweißeinrichtungen modular aufgebaut, dies bedeutet, dass je nach Länge des zu schweißenden Filterelements bzw. des Filtermediums eine entsprechende Anzahl von Schweißmodulen vorgesehen ist die längs der Schweißnaht angeordnet sind und damit auch eine Längsschweißung über eine beliebige Filterlänge ermöglichen.

In einer weiteren Ausgestaltung der Einrichtung zur Herstellung eines Filterelements ist eine Zufuhreinrichtung zum Einführen des Filtermediums vorgesehen, die eine Überwachungseinrichtung zur Überwachung des Materialflusses besitzt. Diese Überwachungseinrichtung erzeugt eine Signal sobald ein neuer Coil mit Filtermedium aufgelegt werden muss.

Die Einrichtung ist weiterbildungsgemäß mit einem Tintenstrahldruckgerät ausgestattet, welches das Filtermedium mit Kenndaten bedruckt. Damit wird ein komplettes Herstellsystem geschaffen welches geeignet ist, in sehr kurzen Prozesszyklen Filterelemente der beschriebenen Art herzustellen.

Diese und weitere Merkmale von bevorzugten Weiterbildungen der Erfindung gehen außer aus den Ansprüchen auch aus der Beschreibung und der Zeichnung hervor.

### Zeichnung

Weitere Einzelheiten der Erfindung werden in der Zeichnung anhand von schematischen Ausführungsbeispielen beschrieben. Hierbei zeigen
- Figur 1: Ein Filterelement in einer Schnittdarstellung
- Figur 2: Die Außenansicht eines Filterelements
- Figur 2a: Die Stirnflächenansicht des Filterelements
- Figur 3: Ein Luftfiltersystem in einer Schnittdarstellung.

### Beschreibung der Ausführungsbeispiele

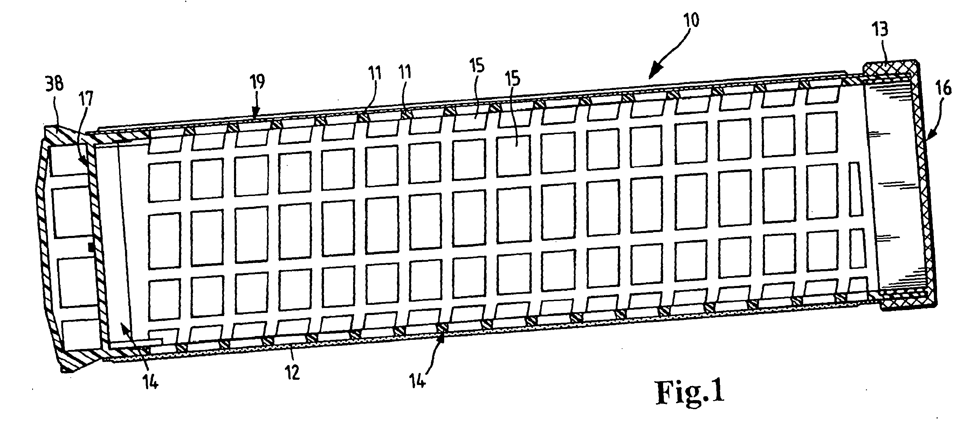

In Figur 1 ist Filterelement 10 im Schnitt dargestellt. Das Filterelement 10 wird durch einen Stützkörper 11, ein Filtermedium 12 und ein Dichtsegment 13 gebildet. Der Stützkörper 11 ist kreiszylindrisch ausgeführt und besteht aus Kunststoff. Damit das zu reinigende Fluid durch den Stützkörper 11 hindurchtreten kann, weist der Stützkörper 11 auf seiner Mantelfläche 14 mehrere Fenster 15 auf. Die Fenster 15 sind bei diesem Ausführungsbeispiel rechteckförmig ausgeführt. Es sind aber auch Ausführungen mit z.B. kreisförmigen oder dreieckigen Fenstern 15 möglich. Der Stützkörper 11 besitzt eine erste Stirnseite 16 und eine zweite Stirnseite 17. Die Mantelfläche 14 im Bereich der Stirnseiten 16, 17 weist keine Fenster 15 auf, wodurch an diesen Stellen kein Fluid durch den Stützkörper 11 hindurchtreten kann. An der ersten Stirnseite 16, welche offen ausgeführt ist, ist das Dichtsegment 13 angeordnet. Dieses Dichtsegment 13 ist ein PUR-Schaum, welcher den Stützkörper 11 und die erste Stirnseite 16 umschließt, wodurch das Filterelement 10 dichtend in eine Aufnahme (nicht dargestellt) eingebracht werden kann. Die zweite Stirnseite 17 ist geschlossen ausgeführt, wodurch sie auch ohne ein dichtendes Gegenstück verhindert, dass das Fluid ungereinigt von einer Rohseite auf eine Reinseite (nicht dargestellt) gelangt.

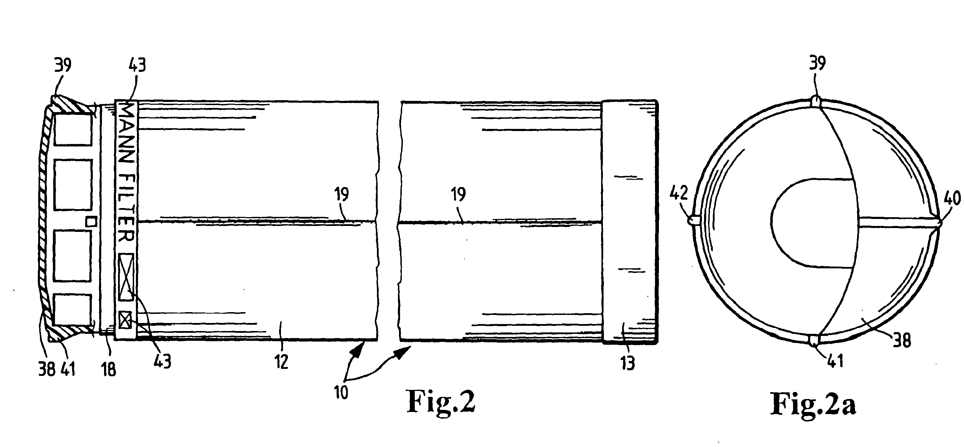

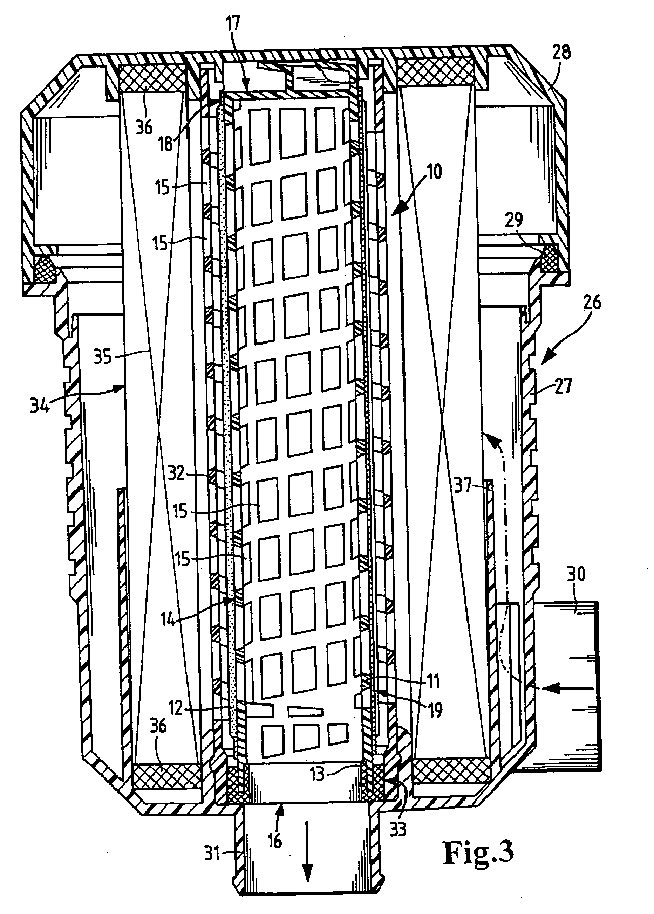

Die Figur 2 zeigt eine Draufsicht auf ein fertig gestaltetes Filterelement 10, dabei ist das Dichtsegment 13 zu erkennen, sowie das Filtermedium 12, welches entlang der Linie 19 seine Längsschweißnaht aufweist. Die Radialschweißnaht 18 bildet den Abschluß des Filtermediums. Der Stützkörper 11 ist an seinem linksseitigen Ende mit einer Grifflasche 38 versehen. Diese Grifflasche 38 ist auch auf der Stirnflächenansicht (Figur 2a) zu erkennen. Am linksseitigen Ende sind ferner Fixiernocken 39, 40, 41, 42 angebracht mit welchen das Filterelement innerhalb des in Figur 3 gezeigten Primärstützrohr geführt wird. Auf der Oberfläche des Filtermediums 12 ist im Bereich 43 ein Schriftfeld angeordnet. Dort kann über einen Tintenstrahldrucker oder eine andere Druckeinrichtung die Kennzeichnung für das entsprechende Element angebracht werden.

In Figur 3 ist ein Luftfilter im Schnitt dargestellt. Der Figur 1 entsprechende Bauteile sind mit gleichen Bezugszeichen versehen. Der Luftfilter weist ein zylindrisches Gehäuse 26 aus Kunststoff auf, welches über einen Behälter 27 und einen Deckel 28 verfügt. Der Behälter 27 ist mit einem Dichtmittel 29 dichtend mit dem Deckel 28 verbunden. Der Behälter 27 besitzt in Bodennähe einen tangential einmündenden Einlass 30 und einen zentrisch angeordneten Auslassstutzen 31. In das Gehäuse 26 ist ein Filterelement 10, wie es in den Figuren 1 und 2 beschrieben ist, eingebracht. Das Filterelement 10 ist koaxial zu dem Auslassstutzen 31 angeordnet, wobei es von einem hohlzylindrischen Primärstützrohr 32, welches entsprechend dem Stützkörper 11 aus Kunststoff besteht und Fenster 15 aufweist, umgeben ist. In diesem Primärstützrohr 32 ist innenseitig eine Aufnahme 33 angeordnet, an welcher sich das Filterelement 10 mit dem Dichtsegment 13 im Bereich der ersten Stirnseite 16 dichtend abstützt. Um das Primärstützrohr 32 herum ist ein ringförmig geschlossenes, sternförmig gefaltetes Primärfilterelement 34 angeordnet, welches dichtend in das Gehäuse 26 eingebracht ist. Dieses Primärfilterelement 34 besteht aus einem Filterpapier 35 und zwei dichtend damit verbundenen Endscheiben 36. Die Endscheiben 36 bestehen aus einem Dichteigenschaften aufweisenden, elastischen Material, wie z.B. PUR-Schaum. Damit die, durch den Einlass 30 einströmende Luft das Primärfilterelement 34 nicht nur an einer Stelle anströmt, besitzt der Behälter 27 eine Strömungsleitwand 37, an welcher die einströmende Luft erst hochsteigen muß, um das Primärfilterelement 34 zu durchströmen.

Wenn das Primärfilterelement 34 beschädigt ist oder fehlt, trennt das Filterelement 10 in Pfeilrichtung den Einlaß 30 dichtend von dem Auslassstutzen 31, wodurch die Luft grob gereinigt durch den Auslassstutzen 31 ausströmt.

## Patentansprüche

1. Filterelement zur Reinigung eines Fluidstroms bestehend aus einem zylindrischen Stützkörper (11), welcher mit Durchbrüchen (15) versehen ist und welcher an einem axialen Ende verschlossen ist, wobei auf dem Stützkörper (11) ein Filtermedium (12) angeordnet ist und wobei das Filtermedium(12) ein Bandmaterial ist, welches sich über näherungsweise die gesamte Länge des Stützkörpers (11) erstreckt und Anfang und Ende des Bandmaterials miteinander verschweißt sind, wobei an der geschlossenen Stirnseite (17) eine Grifflasche (38) vorgesehen ist und wobei an der geschlossenen Stirnseite (17) wenigstens drei Fixiernocken zur lagerichtigen Positionierung weiterer Elemente vorgesehen sind.

2. Filterelement nach Anspruch 1, **dadurch gekennzeichnet, dass** das Filtermedium (12) an dem Stützkörper mit mindestens einer Längsschweißnaht und/oder einer am zylindrischen Stützkörper (11) umlaufenden Schweißnaht (18) verschweißt ist.

3. Filterelement nach einem der vorherigen Ansprüche, **dadurch gekennzeichnet, dass** der Stützkörper (11) im Bereich einer Stirnseite und das Filtermedium durch eine Dichtung (13) fixiert ist, wobei diese Dichtung (13) aus einem PUR-Schaum besteht, welcher sowohl mit dem Filtermedium (12) als auch mit dem Stützkörper (11) verbunden ist.

## Claims

1. Filter element for filtering a fluid flow, the said filter element comprising a cylindrical support body (11), which is provided with openings (15) and which is closed at one axial end, wherein a filter medium (12) is disposed on the support body (11) and wherein the filter medium (12) is a strip material, which extends over almost the entire length of the support body (11) and the start and the end of the strip material are welded together, wherein a gripping strap (38) is provided at the closed end face (17) and wherein at least three securing cams are provided at the closed end face (17) for the correct positioning of additional elements.

2. Filter element according to claim 1, **characterised in that** the filter medium (12) is welded to the support body by means of at least one longitudinal weld seam and/or one weld seam (18) that runs in a circumferential manner around the cylondrical body (11).

3. Filter element according to one of the preceding claims, **characterised in that** the support body (11) is secured in the region of one end face and the filter medium is secured by means of a seal (13), wherein the said seal (13) is produced from PUR foam, which is connected to both the filter medium (12) and the support body (11).

## Revendications

1. Elément filtrant pour purifier un flux de fluide, comprenant un corps de soutien cylindrique (11) pourvu de perforations (15) et fermé sur une extrémité axiale, et un milieu filtrant (12) sur le corps de soutien (11) dans lequel le milieu filtrant (12) est un feuillard qui s'étend sur approximativement toute la longueur du corps de soutien (11), dans lequel le début et la fin du feuillard sont soudées ensemble, une languette de préhension (38) est prévue sur le côté avant fermé (17), et au moins trois goujons d'immobilisation pour le positionnement correct d'autres éléments sont prévus sur le côté avant fermé (17).

2. Elément filtrant selon la revendication 1,
**caractérisé en ce que**
le milieu filtrant (12) est soudé sur le corps de soutien par au moins un cordon de soudure longitudinal et/ou un cordon de soudure (18) entourant le corps de soutien cylindrique (11).

3. Elément filtrant selon l'une quelconque des revendications précédentes,
**caractérisé en ce que**
le corps de soutien (11) est immobilisé au niveau d'un côté avant et le milieu filtrant est immobilisé par un joint (13), ce joint (13) étant constitué de mousse PUR reliée aussi bien au milieu filtrant (12) qu'au corps de soutien (11).
